# EUROPÄISCHE PATENTANMELDUNG

(11) **EP 1 020 709 A2**
(43) Veröffentlichungstag der Anmeldung: **19.07.2000**
(21) Anmeldenummer: 99126229.6
(22) Anmeldetag: 30.12.1999
(51) Int. Cl.: G01D 5/241, G01B 7/00, B65H 23/02, G01D 18/00

(54) **Verfahren und Vorrichtung zur Messung der Lage eines Metallbandes**

(30) Priorität: 13.01.1999 DE 19900981
(71) Anmelder: ELEKTRO-MECHANIK GMBH, D-57482 Wenden (DE)
(72) Erfinder: Münker, Wolfram, 57223 Kreuztal (DE); Schwan, Hubert, 57537 Wissen (DE); Wagner, Harald, 57223 Kreuztal (DE)
(74) Vertreter: Klingseisen, Franz, Dipl.-Ing.

(57) **Zusammenfassung**

Es wird ein Verfahren zur induktiven Messung der Lage eines Metallbandes vorgeschlagen, wobei zumindest auf einer Seite des Bandes eine mit Wechselspannung gespeiste Primärspule auf einer Seite einer Bandkante und auf der anderen Seite der Bandkante eine Sekundärspule angeordnet ist, welche die von der Primärspule induzierte Spannung mißt, die sich durch den Kopplungseffekt mit der Primärspule und dem dazwischenliegenden Metallband ergibt, wobei durch eine seitliche Relativbewegung zwischen Metallband und Primär- sowie Sekundärspule die dadurch erzielbare Meßsteilheit ermittelt und mit einer vorgegebenen optimalen Meßsteilheit verglichen wird, worauf im Falle einer Differenz durch elektronische Mittel die festgestellte Meßsteilheit an die vorgegebene optimale Meßsteilheit angeglichen wird und die dann erhaltenen angepaßten Werte für die laufende Bandlaufregelung verwendet werden. Dieses Verfahren ist auch bei der kapazitiven Messung der Lage eines Metallbandes anwendbar.

## Beschreibung

Die Erfindung betrifft ein Verfahren und eine Vorrichtung zum induktiven oder kapazitiven Messen der Lage eines Metallbandes.

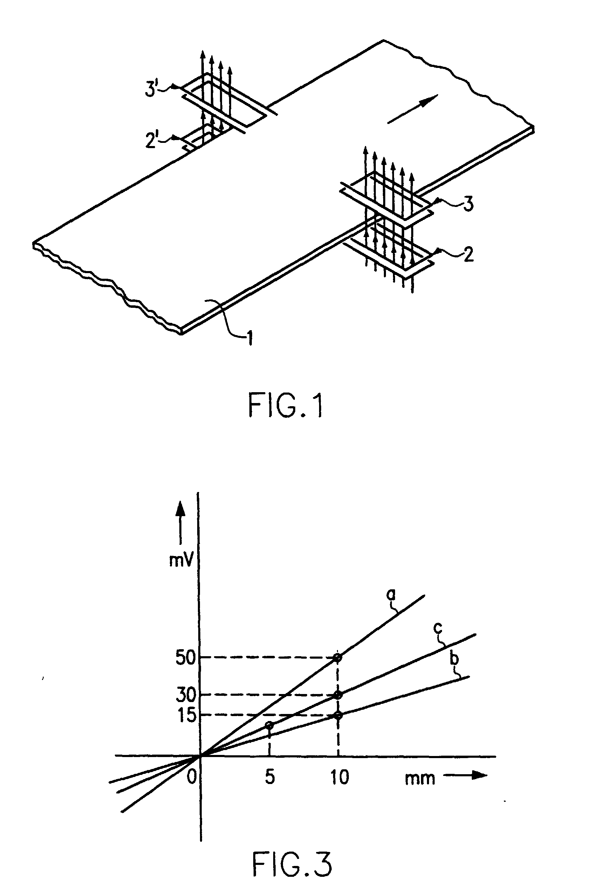

Aus EP O 529 440 ist es bekannt, zur induktiven Messung und Regelung der Lage eines laufenden Metallbandes auf dessen einer Seite z. B. unter der Bandkante eine von einer Wechselspannung gespeiste Primärspule und dieser gegenüberliegend über der Bandkante eine Sekundärspule vorzusehen, wobei eine Erregerschaltung zum Einspeisen der Wechselspannung in die Primärspule und eine Detektorschaltung zum Bestimmen der in der Sekundärspule durch den Kopplungseffekt mit der Primärspule induzierten Spannung vorgesehen sind. Die stationären Primär- und Sekundärspulen haben die Form eines etwa langgestreckten Rechtecks, und sie sind mit ihrer Längsachse quer zur Bandkante angeordnet. Die durch die Spulen ermittelten Meßsignale werden für die Bandlaufregelung verarbeitet, um das Band in einer vorgegebenen Lage zu halten. Dieser Aufbau entspricht dem in Fig. 1 wiedergegebenen.

Um den Einfluß unterschiedlicher Materialeigenschaften und/-oder unterschiedlicher Dickenabmessungen des Bandes bei der Messung zu kompensieren, ist es auch bekannt, in der Mitte des Bandes zwischen Primär- und Sekundärspulen an beiden Bandkanten einen Referenzsensor in Form einer primären und sekundären Referenzspule vorzusehen. Dieser Referenzsensor stellt die minimal mögliche Kopplung fest, wobei das vom Referenzsensor erhaltene Signal mit dem von den beiden Bandkantensensoren erhaltenen Signalen weiterverarbeitet wird.

Die Anordnung eines Referenzsensors zwischen den Primär- und Sekundärspulen erfordert einen gewissen Platzbedarf und unterschiedliche Bandbreiten, die ebenfalls einen Einfluß auf das Meßsignal haben, können durch einen solchen Referenzsensor nicht kompensiert werden. Außerdem ist eine derartige bekannte Ausgestaltung nicht für schmale Bandbreiten geeignet, wenn beispielsweise die Bandbreite in der Größenordnung der Abmessungen des Referenzsensors liegt.

Der Erfindung liegt die Aufgabe zugrunde, ein Verfahren und eine Vorrichtung der eingangs angegebenen Art so auszubilden, daß bei geringstmöglichem Platzbedarf eine exakte Messung unterschiedlicher Bandmaterialien möglich ist und insbesondere auch die durch unterschiedliche Bandbreiten sich ergebende Änderung des Meßsignals kompensiert werden kann.

Diese Aufgabe wird erfindungsgemäß durch die Merkmale in den unabhängigen Ansprüchen 1, 2, 8 und 9 gelöst.

Dadurch, daß durch eine Relativbewegung zwischen Spulen und Band quer zur Bandlaufrichtung die Meßsteilheit ermittelt und an die optimale Meßsteilheit auf elektronischem Wege für die Bandlaufregelung angepaßt wird, kann unabhängig von den jeweils vorhandenen Materialeigenschaften des Bandes und/oder dessen Dicken- und Breitenabmessungen und/oder der Durchlaufhöhe des Bandes ein Meßsignal erhalten werden, das die maximale Spannungsänderung in Abhängigkeit von der Auslenkung des Bandes wiedergibt, so daß man immer optimale Regelverhältnisse erhält.

Damit wird ohne einen Referenzsensor eine Kompensation unterschiedlicher Meßsignale erreicht, wodurch die Meßvorrichtung sehr kompakt und auch für schmale Bandbreiten ausgelegt werden kann.

Die Erfindung wird beispielsweise anhand der Zeichnung näher erläutert. Es zeigen:
- Fig. 1: in einer perspektivischen Ansicht schematisch eine Meßvorrichtung mit Primär- und Sekundärspulen,
- Fig. 2: eine Ansicht der stationären Meßvorrichtung nach Fig. 1 in Bandlaufrichtung,
- Fig. 3: ein Diagramm zur Erläuterung der Meßsteilheit,
- Fig. 4: in der Ansicht nach Fig. 2 schematisch eine Ausgestaltung einer bewegbaren Meßvorrichtung mit unterschiedlich dimensionierten Metallbändern,
- Fig. 5: eine schematische Wiedergabe der Bandlaufregelung,
- Fig. 6: eine perspektivische Ansicht einer Bandlaufregelungseinheit an einem Aufwikkelhaspel,
- Fig. 7: eine Darstellung entsprechend Fig. 5 in Verbindung mit einem Aufwickelhaspel,
- Fig. 8: eine versetzte Anordnung von Spulen in einer Draufsicht, und
- Fig. 9: eine Ansicht der Spulenanordnung nach Fig. 8 in Bandlaufrichtung.

Fig. 1 zeigt ein in Pfeilrichtung laufendes Metallband 1, auf dessen Unterseite an den beiden Rändern rechteckige Primärspulen 2, 2' quer zu den Kanten des Metallbandes angeordnet sind, denen eine Wechselspannung durch eine nicht durchgestellte Einrichtung zugeführt wird. Auf der Oberseite des Metallbandes 1 sind den Primärspulen gegenüberliegend Sekundärspulen 3 und 3' angeordnet, welche die durch Pfeile wiedergegebene, induzierte Spannung in Abhängigkeit von der Abdeckung durch das Metallband 1 messen und mit einer nicht dargestellten Signalverarbeitungseinrichtung verbunden sind, welche die Meßsignale für die Mittenregelung des laufenden Bandes 1 verarbeitet.

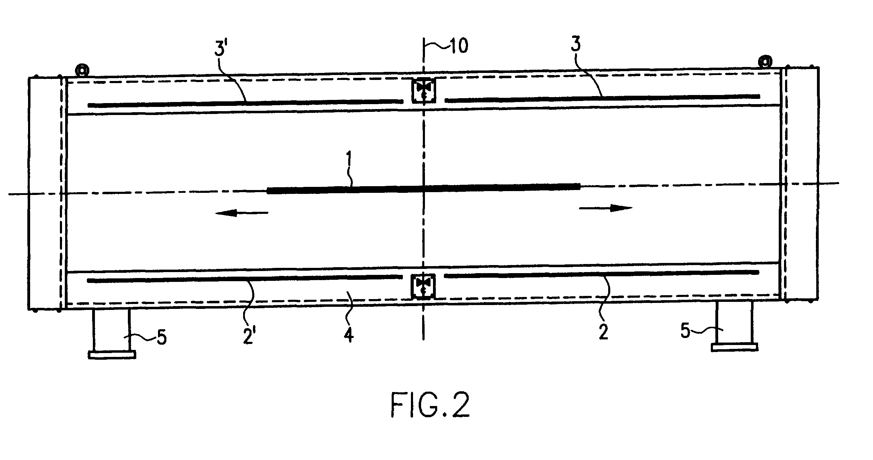

Fig. 2 zeigt die in einem Rahmen 4 angeordneten Primär- und Sekundärspulen, wobei der Rahmen 4 stationär angeordnet und auf Stützen 5 positioniert ist. Der Rahmen 4 kann mit einer Abschirmung für die Spulen versehen sein, die wiederum in verschiedener Weise ausgestaltet sein können, beispielsweise als aus einem Flachbandkabel gewickelte Spulen. Die Spulen 2 und 3 können auch als Stapel von gedruckten Spulen ausgebildet sein, ähnlich einer gedruckten Schaltung.

Wenn das Metallband 1 sich während seines Laufs in Richtung der Pfeile nach links oder rechts in Fig. 2 seitlich bewegt, so erhält man als Meßsignal eine Änderung der Spannung mV in Abhängigkeit von dem Verstellweg des Metallbandes.

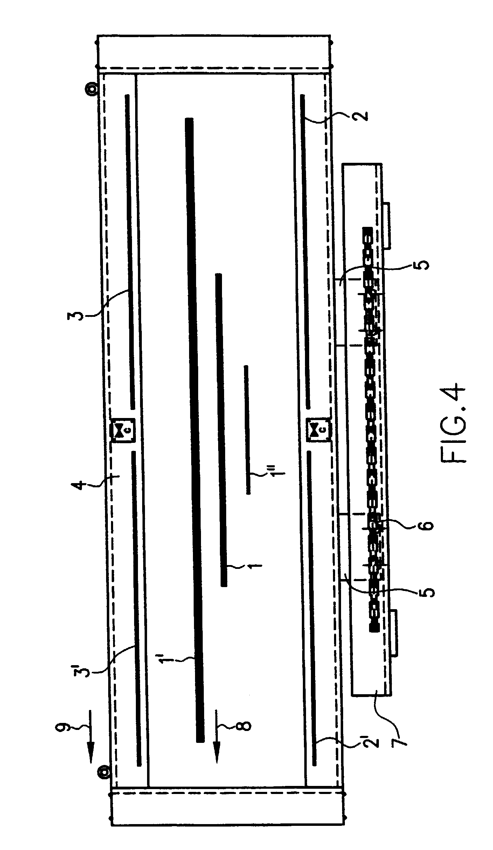

Fig. 3 zeigt die Abhängigkeit des Meßsignals mV von dem Verstellweg verschiedener Metallbänder. Bei einem vorgegebenen Metallband 1 erhält man dabei eine Kennlinie mit konstanter bzw. stetiger Steigung, wie dies z. B. durch die Gerade a in Fig. 3 wiedergegeben ist.

Wenn durch die Meßvorrichtung die Lage eines anderen Metallbandes überwacht werden soll, das andere Materialeigenschaften hat und/oder andere Abmessungen, wie dies zur Erläuterung in Fig. 4 in Form dreier unterschiedlicher Metallbänder 1, 1' und 1'' wiedergegeben ist so erhält man eine veränderte Abhängigkeit des Meßsignals mV von der seitlichen Auslenkung. Für das in Fig. 4 wiedergegebene schmale und dünne Metallband 1 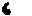 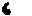 erhält man beispielsweise die durch die Linie b in Fig. 3 wiedergegebenen Abhängigkeit der Spannung mV vom Verstellweg, während man für das breite und dicke Metallband 1' von Fig. 4 eine Signal- bzw. Meßsteilheit entsprechend der Linie c in Fig. 3 erhält.

Geht man beispielsweise davon aus, daß das in Fig. 4 wiedergegebene Metallband 1 eine maximale Meßsteilheit entsprechend der Linie a ergibt, so erhält man bei einer bestimmten seitlichen Auslenkung des Bandes 1 relativ zu den Spulen 2, 3 von z.B. 10 mm ein maximales Meßsignal von 50 mV, während man bei einem anderen Metallband und gleicher Auslenkung ein schwächeres Meßsignal erhält, wie dies aus Fig. 3 ersichtlich ist. Darauf ergibt sich, daß bei einer hohen Meßsteilheit a auch eine hohe Regelgenauigkeit der Bandlaufregelung erzielt wird, während eine flachere Meßsteilheit b oder c zu einer entsprechend schlechteren Regelgenauigkeit führt. Bei einem maximalen Meßsignal von beispielsweise 50 mV führt die Bandlaufregelung das Band 1 schneller in die Ausgangslage zurück als bei einem Meßsignal von 15 mV. In der Praxis treten in Abhängigkeit von unterschiedlichen Bandbreiten und unterschiedlichen Materialeigenschaften Differenzen am Meßsignal bei gleicher Auslenkung mit dem Faktor Drei oder Vier auf.

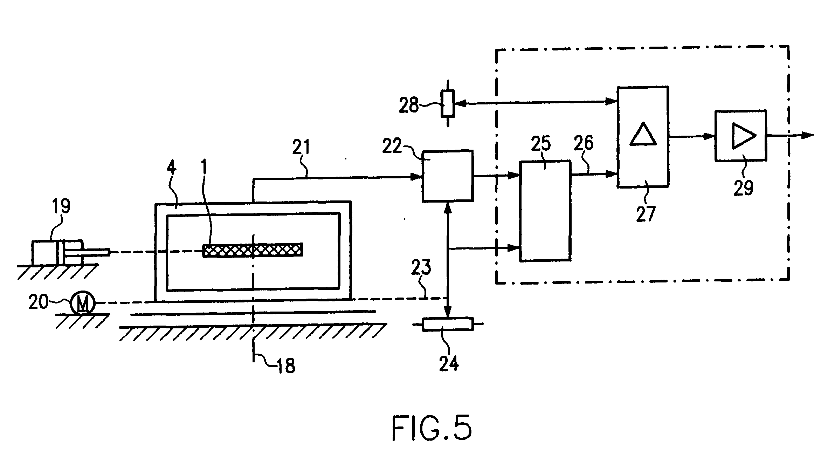

Um eine möglichst hohe Meßgenauigkeit zu erhalten, wird in der in Fig. 5 nicht dargestellten elektronischen Meßsignalverarbeitungseinrichtung die maximale Meßsteilheit a als Referenzwert gespeichert, wie sie sich bei optimalen Verhältnissen, wie Materialeigenschaften und Bandbreite bzw. -dicke im Verhältnis zu den Abmessungen der Primär- und Sekundärspulen, ergibt. Bei der Messung eines anderen, von diesem Referenzband 1 abweichenden Metallband 1' oder 1'' wird durch eine seitliche Relativverstellung zwischen Band 1' und Meßspulen 2, 3 die bei den gegebenen Verhältnissen erzielbare Meßsteilheit c ermittelt. Hierbei kann bei einer Relativverstellung von z.B. 5 mm und bei einer Verstellung von z.B. 10 mm das dabei erzielte Spannungssignal mV ermittelt werden. Durch die beiden Meßwerte bei 5 und 10 mm Verstellweg ergibt sich die Meßsteilheit c unter den gegebenen Bedingungen. Zur Ermittlung der Meßsteilheit reicht auch eine einzige Hubbewegung zwischen Band und Spulen aus.

Die unter den gegebenen Bedingungen erzielte Meßsteilheit c wird mit der gespeicherten optimalen Meßsteilheit a verglichen. Im Falle einer unterschiedlichen Meßsteilheit wird auf elektronischem Wege (bspw. durch einen Korrekturfaktor) die unter den gegebenen Verhältnissen erzielte Meßsteilheit c an die Meßsteilheit a angeglichen, so daß man während der normalen Bandlaufregelung bei einer Auslenkung von z.B. 10 mm zwar nur ein Spannungssignal von 30 mV erhält, dieses aber in der Signalverarbeitungseinrichtung auf ein Spannungssignal von 50 mV umgerechnet oder angeglichen wird, worauf das so korrigierte Meßsignal an die Bandlaufregelung weitergegeben wird, die dann unter optimalen Bedingungen das Band wieder in die Ausgangslage bzw. Mittenstellung bei den Vorrichtungen nach den Fig. 2 und 4 zurückführt, in der ein Meßsignal von 0 mV vorliegt, wenn die Mine des Bandes mit der Mittelachse 10 der Meßvorrichtung zusammenfällt. Damit erhält man unabhängig von den Abmessungen und den Eigenschaften des Metallbandes jeweils eine hohe bzw. maximale Regelgenauigkeit.

Damit die Anpassung der Meßsteilheit unter gegebenen Betriebsbedingungen auch während der Bandlaufregelungen vorgenommen werden kann, wird der die Primär- und Sekundärspulen 2, 3 tragende Rahmen 4 quer zur Laufrichtung des Bandes 1 verschiebbar angeordnet. Bei dem Ausführungsbeispiel nach Fig. 4 sind die Stützen 5 des Rahmens 4 auf einem z.B. durch Ketten verfahrbaren Schlitten 6 angebracht, der in einem stationären Gehäuse 7 angeordnet ist und ein seitliches Verfahren des Rahmens 4 nach beiden Seiten ermöglicht. Die seitliche Verstellung des Rahmens 4 mit darin stationär angebrachten Meßspulen 2, 3 erfolgt durch eine nicht dargestellte Verstelleinrichtung, die durch elektrische Signale angesteuert werden kann. Derartige Verstelleinrichtungen sind bei Bandlaufregeleinrichtungen an sich bekannt.

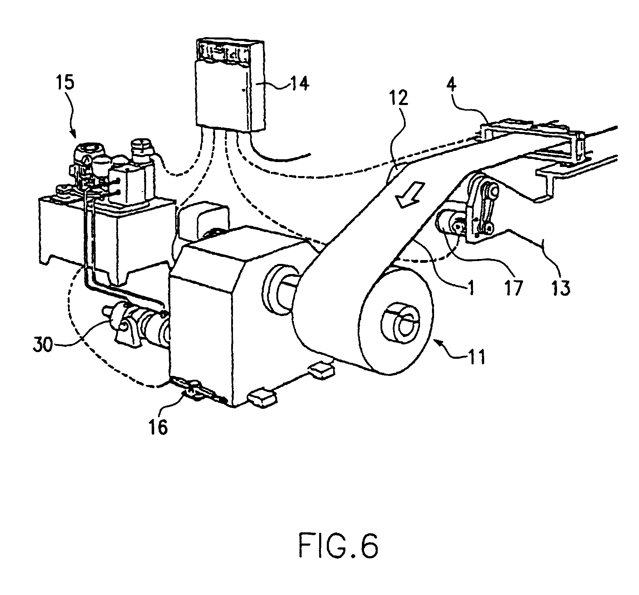

Es kann das Band auch durch Verstellen einer Umlenkrolle 12 (Fig. 6), über die das Band läuft, seitlich relativ zum Rahmen 4 bewegt werden.

Wenn das in Fig. 4 wiedergegebene Metallband 1' während seines Laufs durch den rechteckigen Rahmen 4 seitlich in Richtung des Pfeiles 8 ausgelenkt wird, so kann durch das erhaltene Meßsignal die den Schlitten 6 bewegende Verstelleinrichtung so angesteuert werden, daß durch den Schlitten 6 der Rahmen 4 in Richtung des Pfeiles 9 verstellt wird, damit der Rahmen 4 mit den Meßspulen 2 und 3 der Auslenkung des Bandes 1' nachgeführt wird. Hierbei werden unterschiedliche Meßsignale mV in Abhängigkeit vom Verstellweg erhalten und damit die sich ergebende Meßsteilheit, die mit der optimalen Meßsteilheit a verglichen und im Falle einer Differenz an diese angeglichen wird, so daß die Bandlaufregelung mit maximaler Regelgenauigkeit arbeiten kann.

Diese Anpassung der erhaltenen Meßwerte an die maximale Meßsteilheit kann während einer kurzzeitigen Unterbrechung der Bandlaufregelung bei weiterlaufendem Metallband in bestimmten Zeitabständen oder zyklisch vorgenommen werden, so daß die Bandlaufregelung selbst durch diesen Anpassungsvorgang nicht beeinträchtigt wird. Eine zyklische Überprüfung und Anpassung der Meßsteilheit bietet sich vor allem dann an, wenn die Bandlaufregehing mit getakteter Erregung der Meßspulen arbeitet, so daß zwischen der zyklischen Meßwertabnahme durch die Primär- und Sekundärspulen 2, 3 die Überprüfung der Meßsteilheit vorgenommen werden kann.

Bei der Anpassung der Meßsteilheit während der Bandlaufregelung muß der Verstellweg des Rahmens 4 bei der Signalverarbeitung berücksichtigt und von dem Verstellweg des Metallbandes abgezogen werden, um eine Regelung des Bandlaufs auf die richtige Soll-Lage zu erreichen, wobei die Rahmenmitte die Soll-Lage des Bandes darstellt. Die Anpassung der Meßsteilheit kann auf einen elektrischen Befehl oder zyklisch ohne Unterbrechung der Bandlaufregelung vorgenommen werden.

Es ist aber auch möglich, eine Anpassung der Meßsteilheit vorzunehmen, bevor die Bandlaufregelung in Betrieb gesetzt wird, so daß während des Betriebs der Bandlaufregelung der Rahmen 4 in Fig. 4 stationär bleiben kann und beispielsweise erst dann wieder für einen Anpassungsvorgang verstellt wird, wenn ein anderes Metallband eingesetzt wird, das überwacht werden soll. Diese Anpassung kann auch bei stationärem Band vorgenommen werden. Bei einem Materialwechsel kann beispielsweise ein Kalibrierbefehl an die Signalverarbeitungseinrichtung gegeben werden, worauf durch die nicht dargestellte Verstelleinrichtung der Schlitten 6 mit Rahmen 4 seitlich verstellt und die beschriebene Anpassung der Meßsteilheit entweder einmalig vor Einsetzen der Bandlaufregelung oder zyklisch während der Bandlaufregelung vorgenommen werden kann. Bei einer zyklischen Überprüfung der Meßsteilheit während der Bandlaufregelung kann eine Speicherung beispielsweise eines Korrekturfaktors entfallen.

Erhält man beispielsweise unter optimalen Bedingungen eine maximale Meßsteilheit von 100%, so kann dieser der Faktor 1 zugeordnet werden, während bei einer halb so großen Meßsteilheit von 50% entsprechend einem Faktor von 0,5 dieser mit einem Korrekturfaktor derart dividiert wird, daß für die Bahnlaufregelung wieder der Faktor 1 erhalten wird.

Wenn der Rahmen 4 der Auslenkung des Metallbandes 1 nachgefahren wird, wie dies anhand der Pfeile 8 und 9 in Fig. 4 angedeutet ist, so ist es nicht erforderlich, den Rahmen 4 soweit seitlich zu verstellen, daß die 0- bzw. Mittenstellung des Bandes 1 relativ zum Rahmen 4 mit den darin stationär angebrachten Spulen 2 und 3 erreicht wird. Wenn diese Verstellbewegung bis zur 0- bzw. Mittenstellung des Bandes 1 vorgenommen wird, so kann der Verstellweg des Rahmens 4 bzw. des Schlittens 6 festgestellt und für die laufende Bandlaufregelung verwendet werden, während zuvor die Anpassung der Meßsteilheit vorgenommen wird, die aus der Verstellbewegung des Rahmens 4 relativ zum Band 1 abgeleitet wird.

Die in Fig. 4 wiedergegebene Vorrichtung mit Primär- und Sekundärspulen an den beiden Bandkanten ist für eine Bandmittenregelung vorgesehen, bei der das laufende Metallband 1 mit seiner Mitte auf der Mittelachse 10 zwischen den Meßspulen gehalten wird. Das beschriebene Verfahren ist aber auch bei einer einseitigen Messung einer Bandkante möglich, wobei nur an einer Bandkante eine Primärspule 2 und eine Sekundärspule 3 vorgesehen ist und nur diese eine Kante des Metallbandes 1 in einer bestimmten Lage gehalten werden soll.

Die beschriebene Anpassung der Meßsteilheit kann in der gleichen Weise auch bei einer kapazitiven Vorrichtung mm berührungslosen Erfassen der Lage eines laufenden Bandes aus leitfähigem Material vorgesehen werden, wobei wenigstens eine Sendeelektrode, die mit einem Oszillator verbunden ist, und wenigstens eine kapazitiv an die Sendeelektrode gekoppelte Detektorelektrode auf der einen Seite des Materialbandes parallel zu diesem so angeordnet ist, daß die beiden Elektroden den Bandrand übergreifen, wie dies auch bei den in Fig. 1 wiedergegebenen Spulen 2 und 3 der Fall ist, wobei lediglich anstelle der Spulen 2, 3 plattenförmige Elektroden vorgesehen sind. Eine derartige kapazitive Meßvorrichtung ist z.B. in EP 0 448 988 beschrieben.

Fig. 5 zeigt schematisch den Aufbau der Bandlaufregelung. Mit 18 ist die Achse der Anlagenmitte (bspw. eines Ofens, einer Bandbehandlungsanlage oder dgl.) bezeichnet, wobei in der Regel die Bandmitte mit der Anlagenmitte 18 in Übereinstimmung gebracht werden soll. Bei 19 ist eine Verstelleinrichtung für die Bandlage schematisch angedeutet. 20 ist ein Antriebsmotor zum Verstellen des Rahmens 4, der bei dem dargestellten Ausführungsbeispiel mit seiner Mitte auf die Anlagenmitte ausgerichtet wird. Über die Leitung 20 wird ein Meßsignal von den in Fig. 5 nicht wiedergegebenen Spulen 2, 3 an eine Meßsignalverarbeitungseinrichtung 22 gegeben, die über eine Leitung 23 ebenfalls Signale betreffend den Weg der Rahmenverschiebung erhält. Bei 24 ist ein Meßgerät zur Wegerfassung des Rahmens 4 wiedergegeben. Das Ausgangssignal von der Meßsignalverarbeitungseinrichtung 22 wird an einen ersten Regler 25 gegeben, der auch das Wegsignal vom Rahmen 4 erhält. Am Ausgang 26 des Reglers 25 wird ein Ist-Wen der Bandlage an einen zweiten Regler 27 gegeben, der einen Soll-Wen der Bandlage von einem Soll-Wert-Potentiometer 28 erhält. An diesem Soll-Wert-Potentiometer 28 kann auch eine Mittenverschiebung des Bandes relativ zur Anlagenmitte 18 eingestellt werden. Bei 29 ist ein Verstärker angegeben, über den die Bandverstelleinrichtung 19 angesteuert wird, die auch der Umlenkrolle 12 in Fig. 6 entsprechen kann.

Das von der Meßsignalverarbeitungseinrichtung 22 an den Regler 25 abgegebene Meßsignal stellt ein korrigiertes Meßsignal aufgrund der Einbeziehung des Rahmenweges dar.

Die von einer strichpunktierten Linie umgebenen Bauelemente einschließlich der Meßsignalverarbeitungseinrichtung 22, bilden im wesentlichen die Bandlaufregeleinheit 14 in Fig. 6.

Der Regler 25 kann als Summierer und der Regler 27 als Differenzverstärker ausgebildet sein. 29 ist ein Endverstärker, der ein elektrohydraulisches Regelgerät ansteuert, mittels dem der Stellzylinder 19 betätigt wird. Bei 28 wird normalerweise der Wert Null eingestellt, d. h. Bandmitte entsprechend Anlagenmitte. Dies entspricht beispielsweise dem Durchlauf des Bandes 1 durch einen Ofen, beim Abwickeln von einer Haspel oder dgl.

Fig. 6 zeigt eine Bandlaufregelungseinrichtung an einem quer zur Bandlaufrichtung verschiebbaren Aufwickelhaspel 11, auf dem das Band 1 über eine Umlenkrolle 12 aufgewickelt wird. Der verschiebbare Rahmen 4 mit den Spulen 2, 3 bzw. den Elektroden im Falle einer kapazitiven Abtastung ist auf einem stationären Gestell 13 montiert, an dem auch die Umlenkrolle 12 gelagert ist. Mit 14 ist eine Bandlaufregeleinheit bezeichnet, wobei mittels gestrichelter Linien die Verbindungsleitungen zu den Einheiten wiedergegeben sind, mit denen die Bandlaufregeleinheit 14 in Verbindung steht. 15 ist ein elektrohydraulisches Steuergerät mit Versorgungseinheit und bei 16 ist ein Potentiometer am Aufwickelhaspel dargestellt, mittels dem die seitliche Position des Haspels ermittelt wird. Die Bandlaufregeleinheit 14 steht mit dem Potentiometer 16 in Verbindung und empfängt vom Rahmen 4 die jeweiligen Ist-Werte der Bandlage. Bei 17 ist am Gestell 13 ein Geschwindigkeitsgeber wiedergegeben, mittels dem die Bandlaufgeschwindigkeit über die Umlenkrolle 12 ermittelt wird. Dieser Geschwindigkeitsgeber 17 ist ebenfalls mit der Bandlaufregeleinheit 14 verbunden.

Eine Verzögerung zwischen Bandlagenerfassung am Rahmen 4 und Auflauf des Bandes 1 auf dem Haspel 11 läßt sich durch Ermittlung der Bandlaufgeschwindigkeit bei 17 unter Berücksichtigung des Abstands zwischen Rahmen 4 und Haspel 11 bei der Bandlaufregelung berücksichtigen.

Der gleiche Aufbau kann auch bei einem Abwickelhaspel vorgesehen werden.

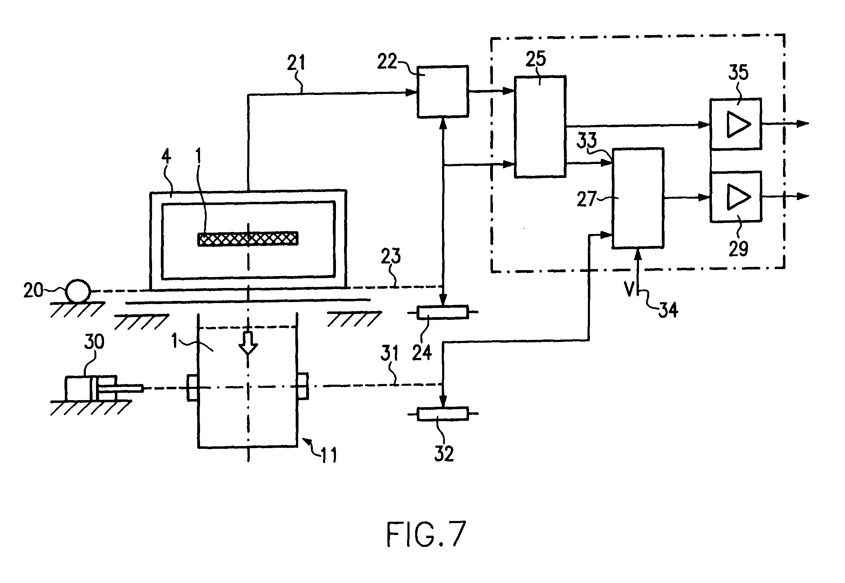

Fig. 7 zeigt den Aufbau der Bandlaufregeleinrichtung an dem Aufwickelhaspel 11 nach Fig. 6, wobei für gleiche bzw. entsprechende Bauelemente die gleichen Bezugszeichen wie in Fig. 5 verwendet sind. Bei dieser Ausgestaltung bildet die Bandlage den Sollwert, weil der auf der Haspel aufgewickelte Coil eine gleichmäßige Wicklung aufweisen muß. Hierbei müssen größere Wege bei der Regelung zurückgelegt werden als bei der Ausführungsform nach Fig. 5, weil die Coilmitte zum gegebenen Zeitpunkt beim Aufwickeln mit der Bandmitte übereinstimmen muß, damit die Ränder des Coils glatt abschließen bzw. glatt miteinander ausgerichtet sind. Hierzu wird über einen Hydraulikzylinder 30 der Haspel seitlich verfahren und der Haspelweg über die Leitung 31 an eine weitere Wegerfassung 32 gegeben, die als Potentiometer ausgebildet sein kann. Zugleich wird der Haspelweg an den zweiten Regler bzw. Differenzverstärker 27 gegeben, der von dem ersten Regler bzw. Summierer 25 bei 33 den Ist-Wert der Bandlage erhält. Der Haspelweg entspricht dem Ist-Wert der Haspelposition. Bei 34 wird die vom Geschwindigkeitsaufnehmer 17 (Fig. 6) ermittelte Bandlaufgeschwindigkeit eingegeben, um die Zeitverzögerung zwischen Bandlagenermittlung am Rahmen 4 und Haspel 11 zu berücksichtigen. Über den Endverstärker 29 wird bei dieser Ausführungsform die Haspelverschiebung mittels des Zylinders 30 angesteuert, während über den Endverstärker 35 die Verstellung des Rahmens 4 über den Motor 20 angesteuert wird. Ansonsten entspricht die Regelung nach Fig. 7 betreffend die Bauelemente 22 bis 25 der Regelung nach Fig. 5.

Ein großer Vorteil der beschriebenen Anpassungen der Meßsteilheit liegt darin, daß das Band gezielt um ein vorgegebenes Maß aus der Mitte versetzt werden kann, wie dies für bestimmte Anwendungen erforderlich ist. Bei einer derartigen Mittenverschiebung geht es damm, die Bandmitte beispielsweise um 10 mm nach links oder rechts von der Mitte des Rahmens 4 zu versetzen. Diese Vorgabe kann beispielsweise über ein Potentiometer eingegeben werden. Wenn man am Potentiometer eine Mittenverschiebung von 10 mm einstellt, so erhält man bei den bekannten Bandlaufregelungen in Abhängigkeit von der jeweiligen Meßsteilheit eine unterschiedliche Mittenverschiebung. Demgegenüber wird erfindungsgemäß von der Vorgabe am Potentiometer die abgespeicherte optimale Meßsteilheit angesteuert, die je nach Vorgabe der Mittenversetzung eine zulässige Umsetzung ergibt, unabhängig davon, welche Meßsteilheit auch immer das jeweilige Band verursacht.

Der Soll-Wert für die Mittenverschiebung der Bandlage kann über irgend eine geeignete Einrichtung vorgegeben werden, während der Ist-Wert der Bandlage durch die Differenz der beiden Ausgangssignale beider Sensorpaare der Meßeinrichtung gebildet wird. Bei der üblichen Mittenregelung ohne Mittenverschiebung ist z.B. der Soll-Wert immer 0V. Durch Vorgabe eines bestimmten von 0 abweichenden Soll-Werts erhält man über die optimale Meßsteilheit immer den entsprechenden Ist-Wert in Form einer Mittenversetzung in mm, wie dies aus Fig. 3 an der Meßsteilheit a ablesbar ist, auch wenn das jeweils in der Anlage laufende Band 1 z.B. eine Meßsteilheit c ergibt.

In Fig. 3 ist durch die durch den 0-Punkt verlaufenden Kennlinien a, b, c angedeutet, daß sich durch eine seitliche Auslenkung des Bandes in Gegenrichtung ein negatives Ausgangssignal ergibt.

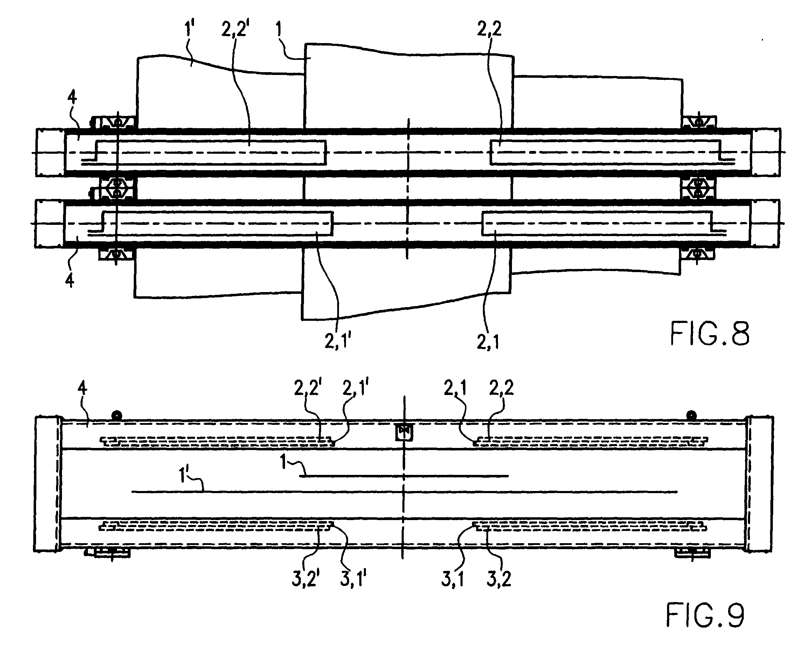

Fig. 8 und 9 zeigen eine im Rahmen 4 versetzte Anordnung von Spulen. Die in der Draufsicht nach Fig. 8 wiedergegebenen Sende- bzw. Primärspulen 2.1 und 2.2 beiderseits des Bandes 1 können auf einer Seite beispielsweise etwa 15 mm relativ zueinander versetzt sein. Wie Fig. 9 zeigt, sind auch die Empfänger- bzw. Sekundärspulen 3.1 und 3.2 in der gleichen Weise wie die Primärspulen versetzt zueinander angeordnet, wobei z. B. die Sekundärspule 3.1 der Anordnung der Primärspule 2.1 entspricht. In Fig. 9 ist mit 1 ein schmales Band und bei 1' ein breites Band zur Erläuterung wiedergegeben.

Der Rahmen 4 mit den Spulen 2.1, 2.2 und 3.1, 3.2 ist stationär angeordnet, wobei durch die versetzte Anordnung der Spulen eine Bandbewegung quer zur Laufrichtung simuliert wird. Hierbei wird beispielsweise einmal über die Spulen 2.1 und 3.1 gemessen, die Messung kurz unterbrochen und erneut über die Spulen 2.1' und 3.1' gemessen, worauf man ein Signal betreffend die Bandlage erhält wie dies bei der Spulenanordnung nach Fig. 1 und 2 der Fall ist. Hierauf wird über die dazu versetzten Spulen 2.2 und 3.2 gemessen, die Messung wieder kurz unterbrochen und über die gegenüberliegenden Spulen 2.2' und 3.2' erneut gemessen, so daß man theoretisch eine symetrische Verschiebung gegenüber den Bandkanten ermittelt. Das Differenzsignal zwischen den beiden Meßvorgängen ergibt die Meßsteilheit unter den vorgegebenen Betriebsbedingungen. Es wird nichts bewegt, aber man erhält dennoch die Meßsteilheit wie bei einer Relativverschiebung zwischen Band 1 und Spulen 2, 3 bei der Ausführungsform nach Fig. 2. Für die beschriebene Messung der Meßsteilheit wird insgesamt viermal getaktet, während die Messung ausgeführt wird.

Die versetzte Spulenanordnung nach Fig. 8 und 9 hat den Vorteil, daß eine Relativbewegung zwischen Rahmen und Band nicht erforderlich ist. Eine solche Verstellbewegung ist unter bestimmten Umständen von Nachteil. Für die Mittenregelung des Bandes reicht eine Versetzung der Spulen von etwa 15 mm in der Regel aus. Hierbei kann die simulierte Bewegung angewendet werden. Für größere Wege, wie sie beispielsweise bei der Anwendung an der Aufwickelhaspel 11 erforderlich sind, ist die versetzte Anordnung der Spulen nicht zweckmäßig.

Die Spulen können in Laufrichtung des Bandes nebeneinander versetzt angeordnet sein, wie dies Fig. 8 zeigt. Es ist aber auch möglich, die Spulen übereinander versetzt anzuordnen, wie dies Fig. 9 schematisch zeigt.

## Patentansprüche

1. Verfahren zur induktiven Messung der Lage eines Metallbandes (1), wobei zumindest auf einer Seite des Bandes (1) eine mit Wechselspannung gespeiste Primärspule (2) auf einer Seite einer Bandkante und auf der anderen Seite der Bandkante eine Sekundärspule (3) angeordnet ist, welche die von der Primärspule induzierte Spannung mißt, die sich durch den Kopplungseffekt mit der Primärspule und dem dazwischenliegenden Metallband ergibt, wobei durch eine seitliche Relativbewegung zwischen Metallband (1) und Primär- sowie Sekundärspule (2, 3) die dadurch erzielbare Meßsteilheit ermittelt und mit einer vorgegebenen optimalen Meßsteilheit verglichen wird, worauf im Falle einer Differenz durch elektronische Mittel die festgestellte Meßsteilheit an die vorgegebene optimale Meßsteilheit angeglichen wird und die dann erhaltenen angepaßten Werte für die laufende Bandlaufregelung verwendet werden.

2. Verfahren zur kapazitiven Messung der Lage eines Metallbandes (1), wobei zumindest auf einer Seite des Bandes (1) eine mit einem Oszillator verbundene Sendeelektrode auf einer Seite der Bandkante, und auf der anderen Seite der Bandkante eine kapazitiv an diese Elektrode gekoppelte Detektorelektrode angeordnet ist, und durch eine seitliche Relativbewegung zwischen Metallband (1) und Sende- sowie Detektorelektrode die dadurch erzielbare Meßsteilheit ermittelt und mit einer vorgegebenen Meßsteilheit verglichen wird, worauf im Falle einer Differenz durch elektronische Mittel die festgestellte Meßsteilheit an die vorgegebene optimale Meßsteilheit angeglichen wird und die dann erhaltenen angepaßten Werte für die laufende Bandlaufregelung verwendet werden.

3. Verfahren zur induktiven Messung der Lage eines Metallbandes (1), wobei, bezogen auf eine Bandkante auf einer Seite des Bandes (1) mindestens zwei quer zur Bandlaufrichtung versetzt angeordnete alternierend mit Wechselspannung gespeiste Primärspulen (2.1 und 2.2) und auf der anderen Seite des Bandes (1) mindestens zwei ebenso quer zur Bandlaufrichtung versetzte Sekundärspulen (3.1 und 3.2) angeordnet sind, welche synchron alternierend die von den zugehörigen Primärspulen induzierten Spannungen messen, die sich durch die Kopplungseffekte mit den Primärspulen und dem dazwischenliegenden Metallband ergeben, wobei die ermittelte Spannungsdifferenz beider Sekundärspulen ins Verhältnis gesetzt zu der Versetzung durch die vorgegebene feste Wegdifferenz ein Maß für die mit elektronischen Mitteln zu berechnende aktuelle Meßsteilheit ist, und diese mit einer vorgegebenen optimalen Meßsteilheit verglichen wird, worauf im Falle einer Differenz durch elektronische Mittel die festgestellte Meßsteilheit an die vorgegebene optimale Meßsteilheit angeglichen wird und die dann erhaltenen angepaßten Werte für die laufende Bandlaufregelung verwendet werden.

4. Verfahren nach Anspruch 1 oder 2,
wobei ein die Spulen (2, 3) bzw. Elektroden tagender Rahmen (4) quer zum Band (1) verstellt wird.

5. Verfahren nach Anspruch 1 oder 2,
wobei die Relativverstellung zwischen Spulen (2, 3) bzw. Elektroden und Band (1) während der Bandlaufregelung vorgenommen und der Verstellweg der Spulen (2, 3) bzw. Elektroden relativ zum Band (1) von dem Verstellweg des Bandes (1) abgezogen wird.

6. Verfahren nach Anspruch 1
wobei die Meßsteilheit zyklisch während der Bandlaufregelung ermittelt und überprüft wird, während die Primärspule (2) zyklisch mit einer Wechselspannung erregt wird.

7. Verfahren nach Anspruch 1 oder 2,
wobei zur Mittenverschiebung des Bandes ein vorgegebener Soll-Wert anhand der vorgegebenen optimalen Meßsteilheit in einen Ist-Wert umgesetzt wird.

8. Verfahren nach den vorhergehenden Ansprüchen
wobei die Anpassung der Meßsteilheit stetig während der Bandlaufregelung vorgenommen wird.

9. Vorrichtung zur induktiven Messung der Lage eines Metallbandes (1), wobei wenigstens auf einer Seite des Bandes auf einer Seite einer Bandkante eine von einer Wechselspannung gespeiste Primärspule (2) und auf der anderen Seite der Bandkante eine Sekundärspule (3) angeordnet ist, mit einer Erregerschaltung zum Einspeisen von Wechselspannung in die Primärspule (2) und einer Detektorschaltung zum Bestimmen der in der Sekundärspule (3) durch den Kopplungseffekt mit der Primärspule induzierten Spannung,
dadurch gekennzeichnet,
daß die Primär- und Sekundärspule (2, 3) quer zur Bandlaufrichtung verstellbar sind.

10. Vorrichtung zur kapazitiven Messung der Lage eines Metallbandes (1), wobei wenigstens auf einer Seite des Bandes auf einer Seite einer Bandkante eine mit einem Oszillator verbundene Sendeelektrode und auf der anderen Seite der Bandkante eine Detektorelektrode angeordnet ist, die mit der Sendeelektrode kapazitiv gekoppelt ist, und mit einer Detektorschaltung zum Bestimmen der in der Detektorelektrode durch den Kopplungseffekt mit der Sendeelektrode induzierten Spannung,
dadurch gekennzeichnet,
daß Sende- und Detektorelektrode quer zur Bandlaufrichtung verstellbar sind.

11. Vorrichtung nach Anspruch 9 oder 10,
wobei ein die Spulen (2, 3) bzw. Elektroden tragender Rahmen (4) durch eine Verstelleinrichtung (20) quer zu dem Band (1) verstellbar ist.

12. Vorrichtung nach Anspruch 11,
wobei der Rahmen (4) auf einem Schlitten (6) angebracht ist.

13. Vorrichtung zur induktiven bzw. kapazitiven Messung der Lage eines Metallbandes (1), wobei auf beiden Seiten des Bandes (1) Primär- und Sekundärspulen (2, 3) bzw. Sende- und Detektorelektroden auf beiden Seiten der Bandkanten angeordnet sind, dadurch gekennzeichnet, daß auf beiden Seiten des Bandes über und unter der Bandkante jeweils zwei relativ zueinander versetzt angeordnete Spulen bzw. Elektroden vorgesehen sind, die stationär relativ zum Band (1) angeordnet sind.
